# EUROPEAN PATENT APPLICATION

(11) **EP 4 723 572 A1**
(43) Date of publication of application: **08.04.2026**
(21) Application number: 24204189.5
(22) Date of filing: 02.10.2024
(51) Int. Cl.: H04L 41/0806, H04L 41/0894, H04L 41/0631, H04L 41/0654, H04L 41/0681, H04W 24/00, H04L 41/0853, H04L 41/14, H04L 41/147, H04L 41/16, H04L 43/06, H04L 43/16

(54) **DEVICES AND METHODS FOR HANDLING FAULTS IN A MOBILE COMMUNICATION SYSTEM**

(71) Applicant: NTT DOCOMO, INC., Tokyo 100-6150 (JP)
(72) Inventor: ÜSTOK, Refik Fatih, 80687 Munich (DE); KATSALIS, Konstantinos, 80687 Munich (DE); TRIAY MARQUES, Joan, 80687 Munich (DE); TAMURA, Ryoji, Tokyo, 100-6150 (JP)
(74) Representative: Viering, Jentschura & Partner mbB Patent- und Rechtsanwälte

(57) **Abstract**

According to one embodiment, a method for handling faults in a mobile communication system is described comprising receiving requirements of a fault handling, generating a fault handling profile based on the received requirements, wherein the fault handling profile specifies which alarms indicating faults should be handled by one or more closed control loops and a policy on how to handle the alarms by the one or more closed control loops, providing the fault management profile to an alarm handling component implementing the one or more closed control loops, wherein the alarm handling component handles alarms for which the fault management profile specifies that they should be handled according to the policy.

## Description

The present disclosure relates to devices and methods for handling faults in a mobile communication system.

When errors occur in a component of a component of a communication network or the component notices an error (e.g. a malfunction), e.g. of another component, it may raise an alarm to trigger a handling of the corresponding alarm or, equivalently, the underlying error. While alarms may be handled manually by personnel of the operator of the communication network, this is inefficient and prone to human error. Therefore, approaches to efficiently handle alarms in a communication network automatically or at least semi-automatically in an efficient manner with as little disturbance to the communication network's operation as possible are desirable.

According to one embodiment, a method for handling faults in a mobile communication system is provided comprising
- receiving requirements of a fault handling
- generating a fault handling profile based on the received requirements, wherein the fault handling profile specifies which alarms indicating faults should be handled by one or more closed control loops and a policy on how to handle the alarms by the one or more closed control loops
- providing the fault management profile to an alarm handling component implementing the one or more closed control loops, wherein the alarm handling component, for alarms for which the fault management profile specifies that they should be handled
   ∘ monitors the mobile communication system for detecting the alarms
   ∘ analyses, for each of at least some of the detected alarms, a correlation between one or more components of the mobile communication system which have triggered the alarm and one or more further components of the mobile communication system and/or between the alarm and one or more other alarms
   ∘ determines fault management actions according to the policy specified by the fault handling profile taking into account the determined correlations
   ∘ triggers execution of the determined fault management actions and
   ∘ clears alarms which were caused by faults that were successfully handled by the executed fault management actions.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows an architecture for fault management according to an embodiment.
- Figure 3: illustrates a Fault Management CCL (Closed Control Loop) Function according to an embodiment.
- Figure 4: illustrates the managing of two CCLs by a Fault Management CCL Function.
- Figure 5: shows an intent handling arrangement according to an embodiment.
- Figure 6: illustrates an embodiment where an FM (Fault Management) CCL controller and an FM CCL Function are integrated into a 3GPP (Third Generation Partnership Project) management system.
- Figure 7: illustrates an embodiment where a FM CCL controller and an FM CCL Function are integrated into an O-RAN (Open Radio Access Network) Service Management and Orchestration (SMO).
- Figure 8: illustrates another embodiment where an FM CCL controller and an FM CCL Function are integrated into an O-RAN SMO.
- Figure 9: illustrates an embodiment where both an FM CCL controller and an FM CCL Function are integrated into a Non-RT (Non-Real Time) RIC (RAN Intelligent Controller) Framework of an SMO.
- Figure 10: illustrates an embodiment where an FM CCL controller is integrated into an O-RAN SMO and an FM CCL Function is integrated into a Near-RT (Near-Real Time) RIC.
- Figure 11: illustrates an embodiment where both an FM CCL controller and an FM CCL Function are integrated into a Near-RT (Near-Real Time) RIC.
- Figure 12: illustrates options for how an FM CCL controller and an FM CCL Function may be arranged in an ETSI (European Telecommunications Standards Institute) NFV (Network Function Virtualization) architecture.
- Figure 13: illustrates an embodiment where an FM CCL controller is part of an OSSBSS.
- Figure 14: shows a flow diagram illustrating a method for handling faults in a mobile communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for handling faults in a mobile communication system, comprising:
   - receiving requirements of a fault handling
   - generating a fault handling profile based on the received requirements, wherein the fault handling profile specifies which alarms indicating faults should be handled by one or more closed control loops and a policy on how to handle the alarms by the one or more closed control loops
   - providing the fault management profile to an alarm handling component implementing the one or more closed control loops, wherein the alarm handling component, for alarms for which the fault management profile specifies that they should be handled,
      ∘ monitors the mobile communication system for detecting the alarms
      ∘ analyses, for each of at least some of the detected alarms, a correlation between one or more components of the mobile communication system which have triggered the alarm and one or more further components of the mobile communication system and/or between the alarm and one or more other alarms
      ∘ determines fault management actions according to the policy specified by the fault handling profile taking into account the determined correlations
      ∘ triggers execution of the determined fault management actions and
      ∘ clears alarms which were caused by faults that were successfully handled by the executed fault management actions.
Example 2 is the method of example 1, wherein the fault handling profile specifies which alarms should be handled by including a list of identifications (alarmIDs) of alarms that were triggered (and are not yet resolved).
Example 3 is the method of example 1 or 2, wherein each of at least some of the alarms that should be handled according to the fault management profile corresponds to a violation of a respective threshold by a respective performance indicator.
Example 4 is the method of example 3, wherein monitoring the mobile communication system for detecting alarms comprises for each of the at least some of the alarms, monitoring the performance indicator.
Example 5 is the method of any one of examples 1 to 4, wherein the policy on how to handle the alarms includes, for one or more performance indicators (e.g. KPIs), a threshold, wherein passing the threshold allows clearing a respective alarm.
Example 6 is the method of any one of examples 1 to 5, wherein the policy on how to handle the alarms includes, for one or more alarms, allowed actions to take for handling the one or more alarms and/or required actions to take for handling the one or more alarms.
Example 7 is the method of any one of examples 1 to 6, wherein the policy on how to handle the alarms includes, for each of one or more alarms, a deadline for clearing the alarm.
Example 8 is the method of any one of examples 1 to 7, wherein the policy on how to handle the alarms includes, for each of one or more alarms, a specification of at least one closed control loop to be used for handling the alarm.
Example 9 is the method of any one of examples 1 to 8, wherein the alarm handling component further generates a report about which alarms have been cleared and sends the report to a generator (and provider) of the fault handling profile.
Example 10 is the method of any one of examples 1 to 9, comprising sending information about which alarms have been cleared to a sender of the requirements.
Example 11 is the method of any one of examples 1 to 10, wherein triggering execution of the determined fault management actions comprises triggering that an intent is generated and supplied to an intent handler, wherein the intent specifies that the determined fault management actions should be handled.
Example 12 is the method of any one of examples 1 to 11, comprising, for one or more detected alarms which have not been successfully handled by the executed fault management actions, notify one or more other fault handling components (e.g. an intent handler) to perform further fault management actions.
Example 13 is the method of any one of examples 1 to 12, comprising requesting the alarm handling component to implement the one or more closed control loops and/or to stop implementing the one or more control loops after alarms have been handled (i.e. perform life cycle management of the CCLs).
Example 14 is the method of any one of examples 1 to 13, further comprising receiving capability information from the alarm handling component about which alarms the alarm handling component can (i.e. is able to) handle, wherein the fault handling profile is generated taking the received capability information into account.
Example 15 is a fault handling arrangement (or system) of a communication system, configured to perform the method of any one of examples 1 to 14 (in particular a FM CCL controller and a FM CCL function as described above, wherein the fault handling component corresponds to the FM CCL function and the other steps are performed by the FM CCL controller).

It should be noted that one or more of the features of any of the examples above may be combined with any one of the other examples.

According to further embodiments, a computer program and a computer readable medium comprising instructions, which, when executed by a computer, make the computer perform the method of any one of the above Examples are provided.

In the following, various examples will be described in more detail.

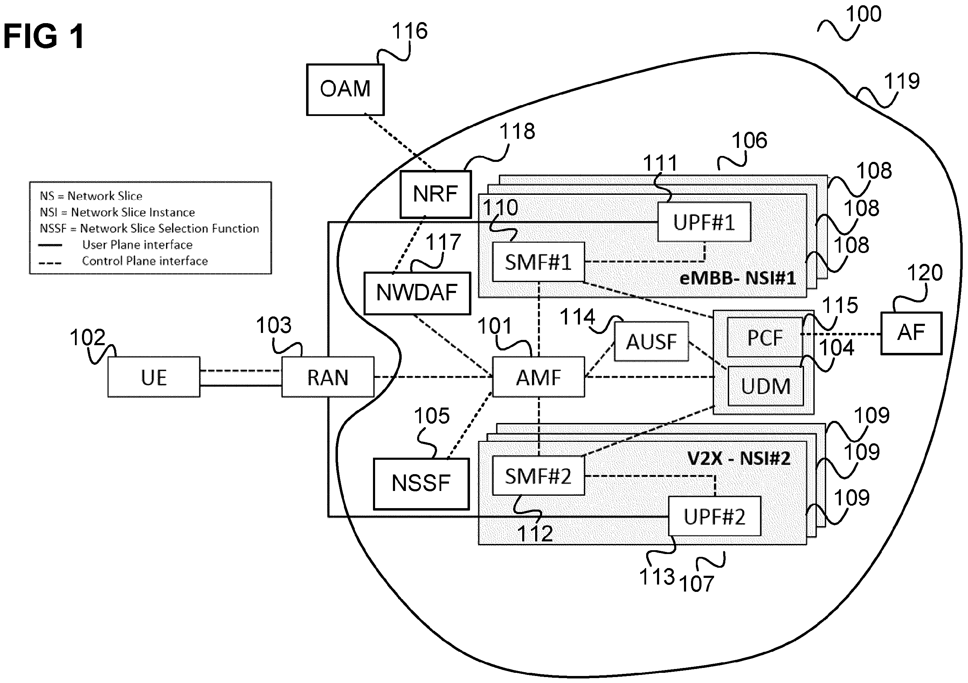

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

Faults (i.e. errors) may occur in various components of a communication system as illustrated in figure 1. Typically, when a fault is detected, an alarm is triggered.

An alarm can be understood as the management representation of a fault, a (detected) error or a failure that requires attention or reaction by an operator or some machine. Fault Management (FM) is concerned with representing, managing, and reporting alarms. Fault Management can also be referred to as Alarm Management. An alarm model may be used that is independent from the underlying managed system. For example, the same model can be used to represent alarms from any 3GPP generation or other networks and any network resource. Specifics of the managed system manifest themselves only in the values of the information elements of the alarm model.

Fault Management can be complex as alarms need to be monitored and a root cause analysis needs to be performed to identify the root cause (i.e. the reason) of the underlying error. This may for example include following a sequence of troubleshooting steps to narrow down the issue. As this process may take a long time, it may disrupt the network operation. Further, as typically a human operator performs the troubleshooting process, it is prone to the error.

Closed Control Loop (CCL) is a type of control mechanism that monitors and regulates a set of managed entities with the objective of achieving a specific goal. A CCL can be logically decomposed into several stages, each providing a specific functionality and where the stages work together to achieve the stated goal. An example is MAPE-K (Monitor Analyse Plan Execute - Knowledge).

Fault Management is a use-case where closed control loops can be applied. According to various embodiments, an approach to automatize troubleshooting including resolving existing alarms (i.e. alarms that have been triggered but not yet resolved, i.e. cleared) is described.

According to various embodiments, the fault management (i.e. handling of faults) according to various embodiments includes a management service (MnS) consumer to request the producer of a CCL service to resolve (and clear) alarms and get information about results (i.e. a report) about the resolution (and clearance) of alarms.

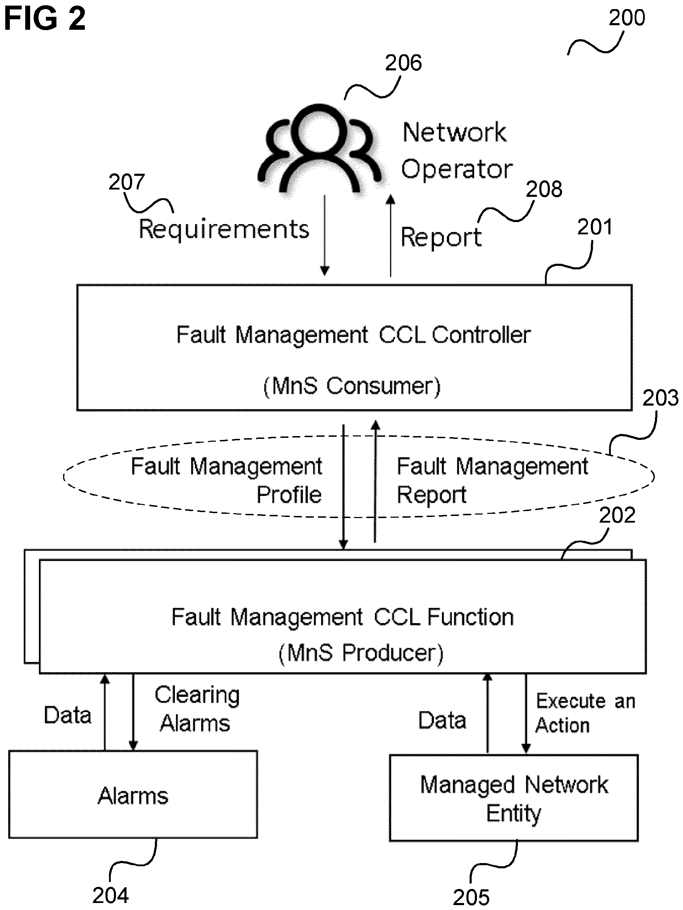

Figure 2 shows an architecture 200 for fault management according to an embodiment.

The architecture 200 is implemented by components of a mobile communication network, e.g. by components as described with reference to figure 1.

The architecture 200 includes a Fault Management Closed Control Loop (CCL) Function 202. It is for example implemented in form of an Information Object Class (IOC) "FaultManagementClosedControlLoopAgent" to represent the information and functionality (capabilities for operations, such as performing actions on one or more managed network entities 205) for one or more closed control loops managing faults and alarms associated with network entities (managed objects) such as network functions, network slices, network slice subnets etc. Further, the Fault Management CCL Function 202 may perform fault management CCL life cycle management (LCM).

The architecture 200 further comprises a controller function denoted as Fault Management CCL Controller which is configured to control the Fault Management CCL Function 202 (or multiple Fault Management CCL Functions).

The Fault Management CCL Controller 201 can act as a MnS (Management Service, here the Closed Loop Control Fault Management Service) consumer and the Fault Management CCL Function 202 as the MnS producer.

The architecture 200 further comprises an interface 203 between the Fault Management CCL Controller 201 and the Fault Management CCL Function 202. Via the interface 203, the following IOCs may be sent by the Fault Management CCL Controller 201 and the Fault Management CCL Function 202, respectively:
- a "FaultManagementProfile" IOC to represent MnS consumers' requests and requirements for managing existing fault alarms including information such as alarmIDs, alarm clearance policies, alarm clearance preparation actions.
- a "FaultManagementReport" IOC to represent the result of fault management for specified alarms 204 including the impact, correlation and other selected attributes such as time, KPI (key performance indicator) measurements. This allows providing a detailed report of cleared alarms (instead of only a notification about cleared alarms).

The architecture 200 may further comprise the usage of correlation datatypes which collates different alarms and specific metrics (i.e. KPIs) with CCLs.

In the following, the Fault Management CCL Controller 201 and the Fault Management CCL Function 202 are described in more detail.

As mentioned above, the Fault Management CCL Function 202 acts as MnS producer. It is described by the FaultManagementClosedControlLoop IOC to represent the information for managing faults associated with, for example, a Network Function,

Network Element, Network Slice or Network Slice Subnet. The FaultManagementClosedControlLoop IOC can also be triggered by a LoopTrigger object according to 3GPP (see TR 28.867).

The FaultManagementClosedControlLoop IOC includes attributes inherited from the Top IOC (as defined in TS 28.622) and it can include attributes such as operational State, administrativeState, controlLoopLifeCycle and attributes to the role (i.e. to what a respective CCL manages such as networkSliceRef, networkSliceSubnetRef and clearSystemId for which the CCL is allowed to clear alarms). The FaultManagementClosedControlLoop IOC can also include attributes regarding the alarms that it can potentially support resolving, for example but not limited to, alarms related to a software component (i.e. Application Layer) so that it can inform the consumer regarding what alarms can be supported by the closed control loop.

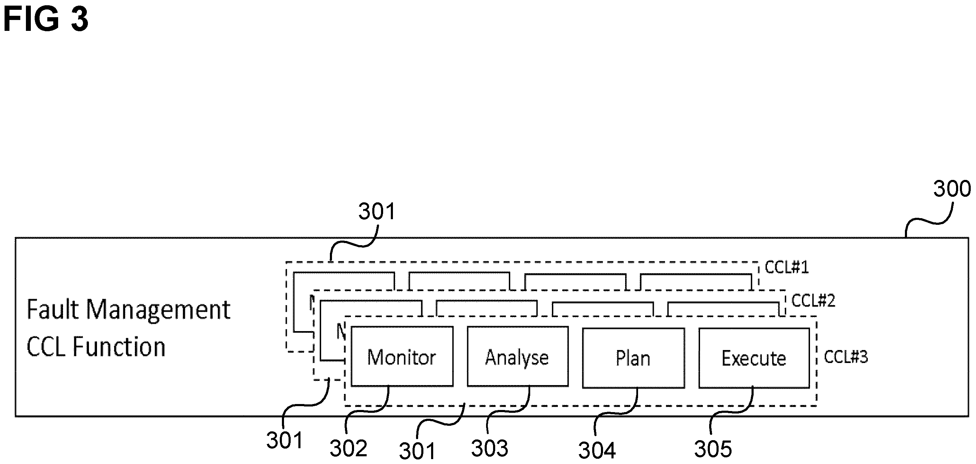

Figure 3 illustrates a Fault Management CCL Function 300 according to an embodiment.

The Fault Management CCL Function 300 provides the functionality of one or more CCLs 301. This functionality in particular includes monitoring 302 (e.g. querying or detecting alarms), analysing 303 (e.g. finding reasons for alarms and determining correlations been network entities, e.g. impact of a fault of one network entity to another, as well as correlations with performance degradation, e.g. according to key performance indicator thresholds), planning 304 (determining suitable actions to resolve errors) and executing 305 (of determined actions).

Operations according to these closed control loop functionalities can result in clearing the existing alarms (by resolving the underlying errors and/or root causes). The Fault Management CCL Function 300 is for example implemented by (software) agents configured to monitor, analyse, plan and execute.

The monitoring functionality 302 for example includes monitoring for alarms, as well as other attributes specified in the alarms, PM(performance management) and/or KPI measurements and any related events, as well as any relevant information in a knowledge base used by the respective CCL.

The analysing functionality 303 for example includes analysing the correlation of alarms, root cause analysis and association with other PM and/or KPI measurements (i.e. others than that or those causing a respective alarm) and the impact of faults (or actions) on other managed entities. Artificial intelligence (in particular machine learning) techniques can be used in the analysis.

The planning functionality 304 includes planning actions to take in order to resolve the faults (and thus the alarms) as well as the avoiding any possible impact to other managed entities (as e.g. determined by the analysing functionality 204). It may determine troubleshooting policies (in particular at least partially based on policy information included in the Fault Management Profile provided by the Fault Management CCL Controller 201) and take them into account when determining actions. Artificial intelligence (in particular machine learning) techniques can be used in the analysis and/or planning.

The executing functionality 305 includes execute planned actions (e.g. according to determined troubleshooting policies).

As illustrated in figure 3, a Fault Management CCL Function 300 can provide the functionality of (in other words: execute) more than one CCL.

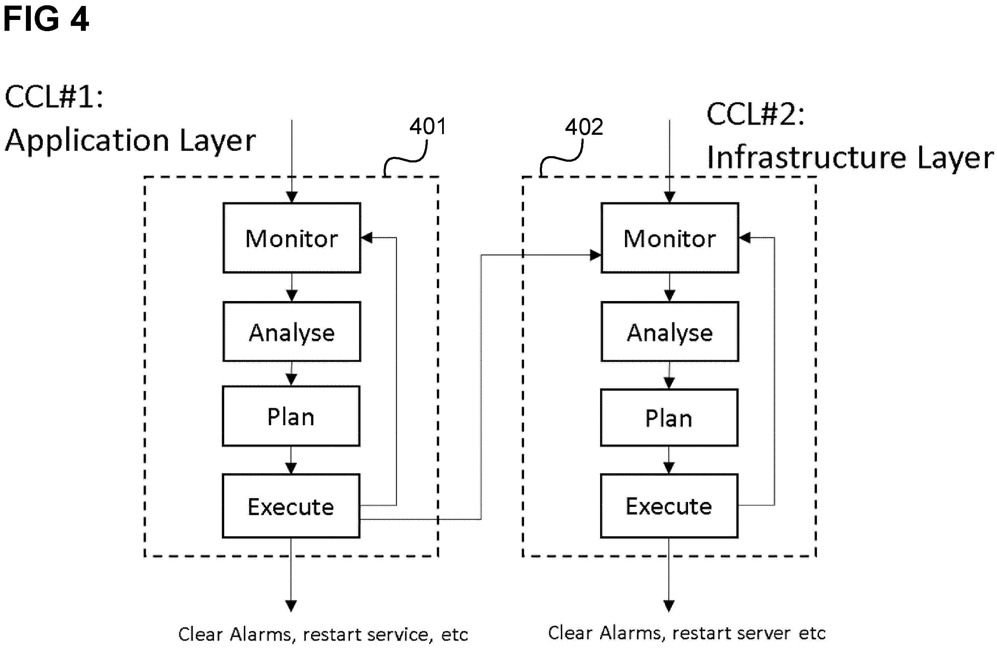

Figure 4 illustrates the managing of two CCLs 401, 402 by a Fault Management CCL Function 300.

For this, the Fault management CCL Controller 201 instructs the Fault Management CCL Function 202 which CCLs to use and how to use them. The Fault Management CCL Function 202 is responsible for the LCM of all the CCLs 401, 402 (e.g. based on requests from the CCL Controller 201).

For example, the first CCL 401 can be used to control the application layer (e.g., how network functions operate) and the second CCL 402 can be used to control how the Infrastructure layer operates according to the alarms received.

The Fault Management CCL Controller 201 is responsible for configuring the Fault Management CCL Function 202. It collects results from the Fault Management CCL Function 202 and for example stores them in a database. According to various embodiments, it provides an interface to the network operator 206 (e.g. an orchestration system or a human user) to allow configuration of the one or more CCLs implemented by the Fault Management CCL Function 202. In particular, the network operator 206 may specify requirements 207 for the handling of errors and alarms.

The Fault Management CCL Controller 201 processes (and is capable of understanding) the success ratio of Fault Management CCLs and manages LCM of Fault Management CCLs (i.e. controls the LCM of CCLs performed by the Fault Management CCL Function 202). Further, it may provide a report 208 about the work performed by the one or more CCLs implemented by the Fault Management CCL Function 202 (e.g. results of the fault management) to the network operator 206. The report 208 may include a general health report of the communication network (or the subsystem managed by the respective CLL(s)).

The interface 203 between the Fault Management CCL Controller 201 and the Fault Management CCL Function 202 may in particular act as a configuration interface to allow the Fault Management CCL Controller 201 to configure the Fault Management CCL Function 202. For this, it may use a FaultManagementClosedControlLoop IOC (FaultManagementCCL IOC), for example for changing an administrative state, an operational state, a CCL life cycle etc. It may use the FaultManagementCCL IOC in particular to forward the requirements 207 it has received from the network operator 206 for managing alarms to the Fault Management CCL Function 202. The FaultManagementClosedControlLoop IOC may include the FaultManagementProfile IOC.

The FaultManagementProfile IOC contained by the FaultManagementCCL IOC may represent the Fault Management CCL Controller's requirements for managing alarms (which may at least in part be based on the requirements 207 the Fault Management CCL Controller 201 has received from the network operator 206).

The FaultManagementProfile IOC may for example include one or more of the following attributes:
- clearUserId specifying one or more users (e.g. a Fault Management CCL Function or one of its CCLs) which are allowed to clear respective alarms (as per TS 28.111)
- a list of alarmIDs (alarm identifications) specifying alarms which will be handled by a FaultManagementCCL of the FaultManagementCCL function 202. An alarmId identifies an AlarmRecord in an alarm list (e.g. as specified in TS 28.111), which can include information such as alarmRaisedTime, eventType, probableCause, monitoredAttributes, rootCauseIndicator and correlatedNotifications etc. This information can be leveraged by the CCL to enhance the correlation of alarms and identify the root causes, for example correlation of alarms with change in PM and or KPIs and/or fault supervision events.
- a list of alarmClearancePolicies, which includes an alarmClearancePolicy data element (of a certain data type) specifying one or more policies to clear the alarms by the CCL. Each AlarmClearancePolicy data element indicates the clearance policies under which alarms are requested to be cleared by the CCL. The alarmClearancePolicy data element can include the following:
   ∘ a list of threshold KPIs specifying when the selected alarms will be cleared by the closed control loop when they are passed by specific KPIs (e.g. a certain quality indicator has reached a predetermined minimum level).
   ∘ an AlarmClearanceDeadline that indicates the time before when the alarms needs to be cleared by the CCL.
- a list of alarmClearancePreparationActions which includes an alarmClearancePreparationAction dataType to prepare the respective managed objectInstance (i.e. managed network entity) for alarm clearance, for example, changing the operational state of a managed objectInstance before fault management actions are executed so that the traffic to/from the managed objectInstance can be managed to avoid any disruption
- any attribute to indicate any preference of a CCL if multiple CCLs are required to manage the faults related to alarms.

Via the interface 203, the Fault Management CCL Function 202 reports to the Fault Management CCL Controller 201 results for each management request (i.e. for example for each FaultManagementProfile IOC Fault Management CCL Controller 201 has provided to it). For this report, the Fault Management CCL Function 202 uses the FaultManagementReport IOC. The report includes one or more of alarm identifications (i.e. alarmIds) that have been resolved and cleared, enhanced correlation information, time related attributes such as reporting time and clearance time for each alarm and current measurement results of relevant KPIs.

According to an embodiment for a 3GPP communication system, the FaultManagementReport IOC represents the result of fault management for specified alarms, cleared by a CCL implemented by the Fault Management CCL Function 202, wherein the FaultManagementReport IOC may include one or more of the following attributes:
- reportTimeWindow, indicates the time window observed for the FaultManagementReport IOC
- a List of alarmIds that have been cleared with actions taken by the CCL(s), companied with enhanced correlation information if any
- current measurement of KPIs that are indicated in the alarmClearancePolicies
- additional information such as any prevented impacts to the network.

The report 208 provided by the Fault Management CCL Controller 201 to the network operator 206 for each request (i.e. for example per FaultManagementProfile IOC) may also include information about general health status and success rate. The success rate can be evaluated as the ratio between the number of alarms that are cleared and the total number of alarms that are processed. The report 208 may be in the form of a FaultManagementCCLReport IOC to represent the general health status and success rates of fault management CCL. The FaultManagementCCLReport IOC may for example include one or more of the following attributes:
- healthStatus, indicates the general health status of one or more FaultManagementCCLs
- successRate: the success rates of one or more CCLs which can be the ratio between the number of alarms that are cleared and the total number of alarms that are processed by the one or more CCLs.

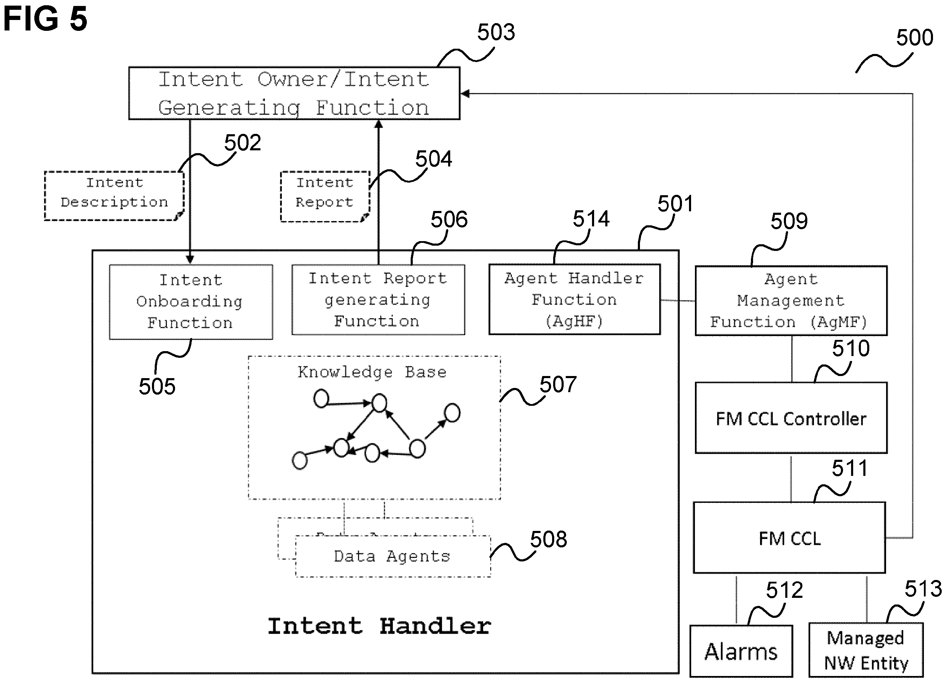

According to various embodiments, an interface between Fault Management Closed Control Loops and intent handlers and intent generating functions may be provided. This is described in the following with reference to figure 5.

Figure 5 shows an intent handling arrangement 500 according to an embodiment.

The intent handling arrangement 500 comprises an intent handler 501. The intent handler 501 is configured to receive an intent description 502 from an intent owner (also referred to as intent generating function) 503, handle the intent described by the intent description 502 and sends a corresponding intent report 504 back to the intent owner 503.

For this, the intent handler 500 comprises an intent onboarding function 505 (providing an intent onboarding service for receiving an intent), an intent report generating function 506 (providing an intent reporting service), a knowledge base 507 and, as one or more intent handler agents, one or more data agents 508 and possibly one or more intelligent agents (not shown). Each data agent 508 is a software that collects and writes data from entities (typically network components) managed by the intent handler to respective databases in the knowledge base 507.

The knowledge base 507 is a pool of data (e.g. at least partially determined by inference, possibly ML (machine learning)-based) that is used by the intent handler 500 and its components.

Further, the intent handler 501 comprises an AgHF (Agent Management Handling Function) 514 which is coupled to an (Agent Management Function) AgMF 509. The intent handler 501 may act as a consumer of a Fault Management CCL controller 510 via the AgMF 509.

A request coming from the intent handler 501 to the Fault Management CCL Controller 510 is associated with a clearUserID. The request can for example be delegated from an intent driven management service, i.e. the intent handler 501 may forward an intent (for managing faults and/or alarms) to the Fault Management CCL Controller 510 in form of the request. For example, in order for an intent to be processed, some alarms 512 related to one or more managed network entities 513 need to be cleared and therefore the intent handler 501 sends a request to the Fault Management CCL Controller 510 to clear the alarms 512 via the AgMF 509.

The Fault Management CCL Controller 510 then configures a Fault Management CCL Function (implementing one or more Fault Management CCLs) 511 based on the request as described above.

According to one embodiment, the Fault Management CCL Function 511 may decide to upgrade or downgrade a managed network entity 513 and request the intent generating function 503 to create a corresponding intent to cause the intent handler 501 to perform the corresponding maintenance function. In other words, the Fault Management CCL Function 511 may, for handling an error, trigger generation of an intent to handle the error. In general, an interface may be introduced between a Fault Management CCL Function and an intent generating function to allow the Fault Management CCL Function to request generation of an intent, e.g. of an intent object.

It is also possible that the knowledge base 507 of the intent handler 501 is shared with one or more CCLs

In the following, various options for integrating a fault management architecture as illustrated in 200 into a communication system are given.

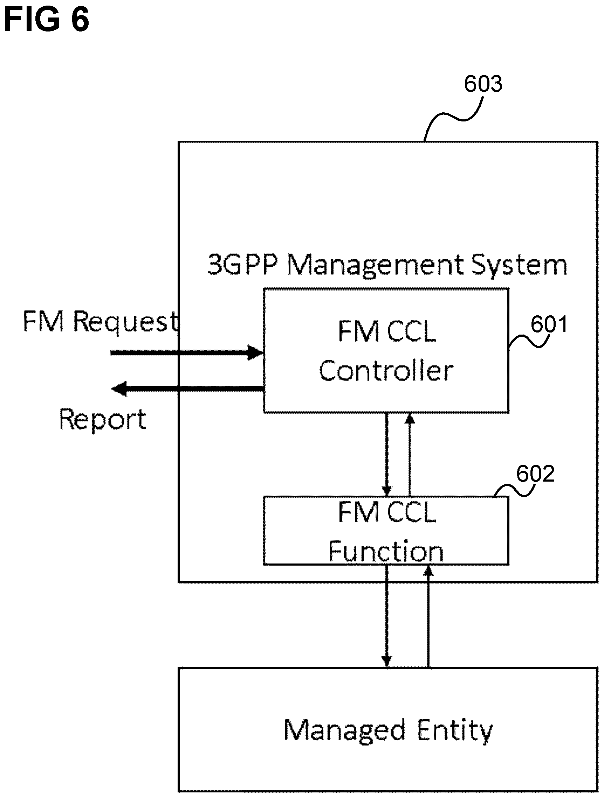

Figure 6 illustrates an embodiment where the FM CCL controller 601 and the FM CCL Function 602 are integrated into a 3GPP management system 603.

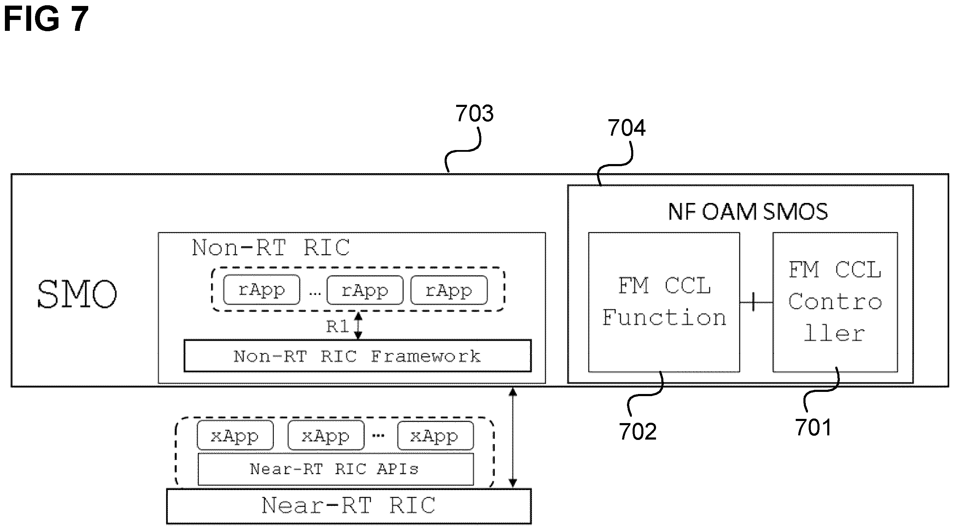

Figure 7 illustrates an embodiment where the FM CCL controller 701 and the FM CCL Function 702 are integrated into an O-RAN (Open Radio Access Network) Service Management and Orchestration (SMO) 703.

The FM CCL controller 701 and the FM CCL Function 702 may in particular be integrated as part of Network Function Operations, Administration, and Maintenance Service Management and Orchestration Service (NF OAM SMOS) 704 but they can also be integrated into the SMO in other ways.

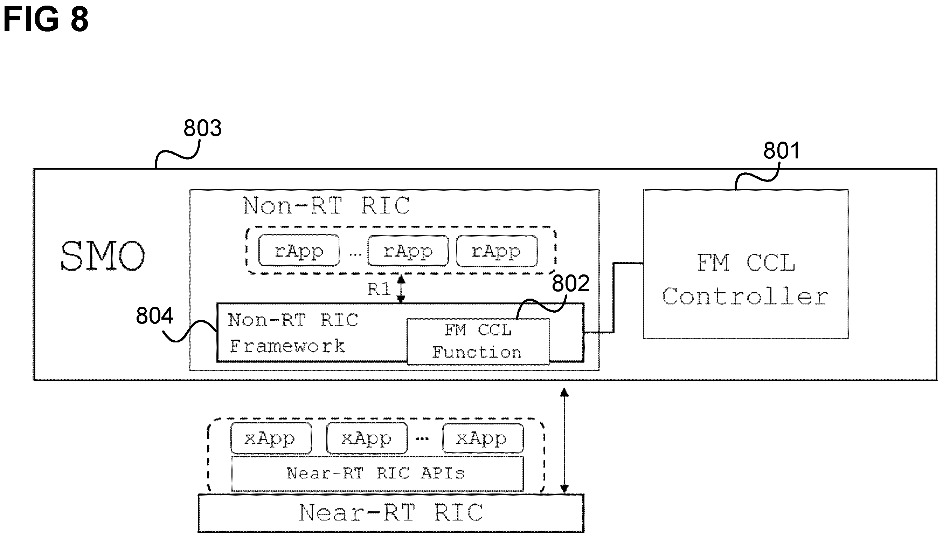

Figure 8 illustrates an embodiment where the FM CCL controller 801 and the FM CCL Function 802 are integrated into an O-RAN SMO 803, wherein the FM CCL Function 802 is integrated into the Non-RT (Non-Real Time) RIC (RAN Intelligent Controller) Framework 804 of the SMO 803.

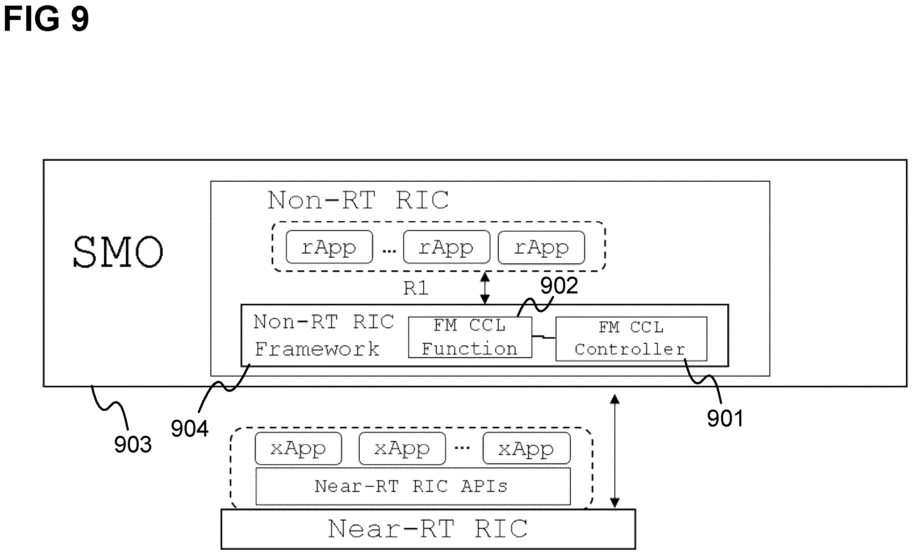

Figure 9 illustrates an embodiment where both the FM CCL controller 901 and the FM CCL Function 902 are integrated into the Non-RT (Non-Real Time) RIC (RAN Intelligent Controller) Framework 904 of an SMO 903.

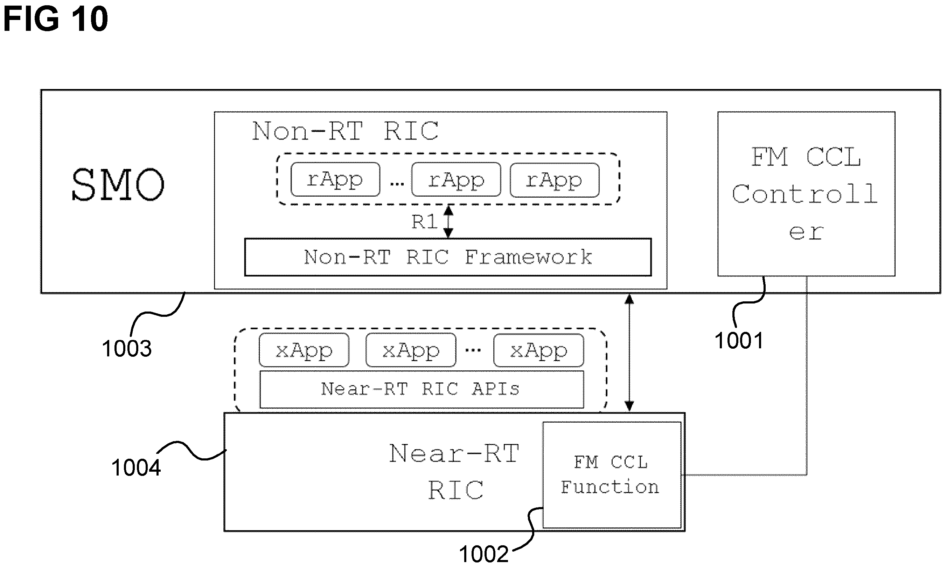

Figure 10 illustrates an embodiment where the FM CCL controller 1001 is integrated into an O-RAN SMO 1003 and the FM CCL Function 1002 is integrated into a Near-RT (Near-Real Time) RIC 1004 coupled to the SMO 1003.

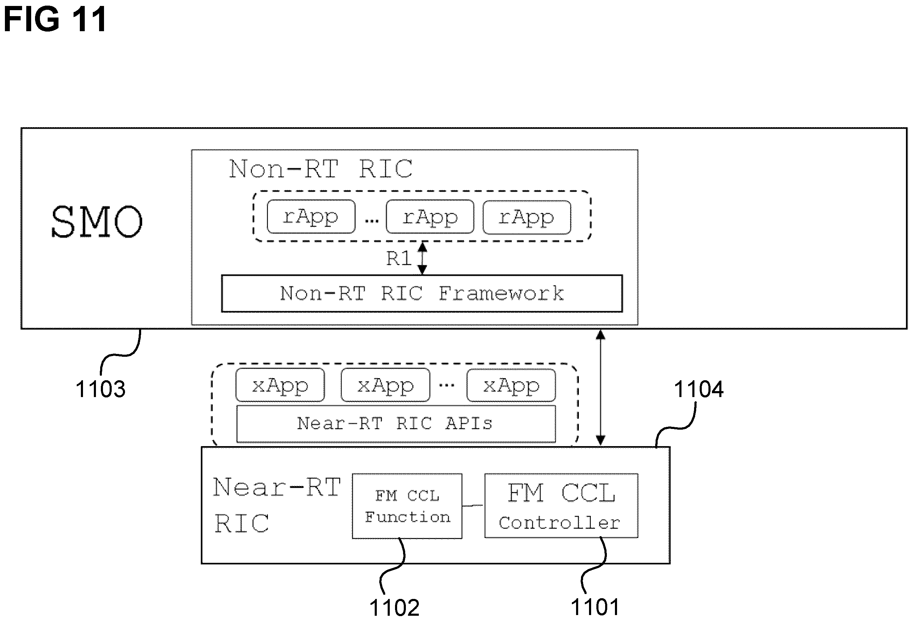

Figure 11 illustrates an embodiment where both the FM CCL controller 1101 and the FM CCL Function 1102 are integrated into a Near-RT (Near-Real Time) RIC 1104 coupled to a SMO 1103.

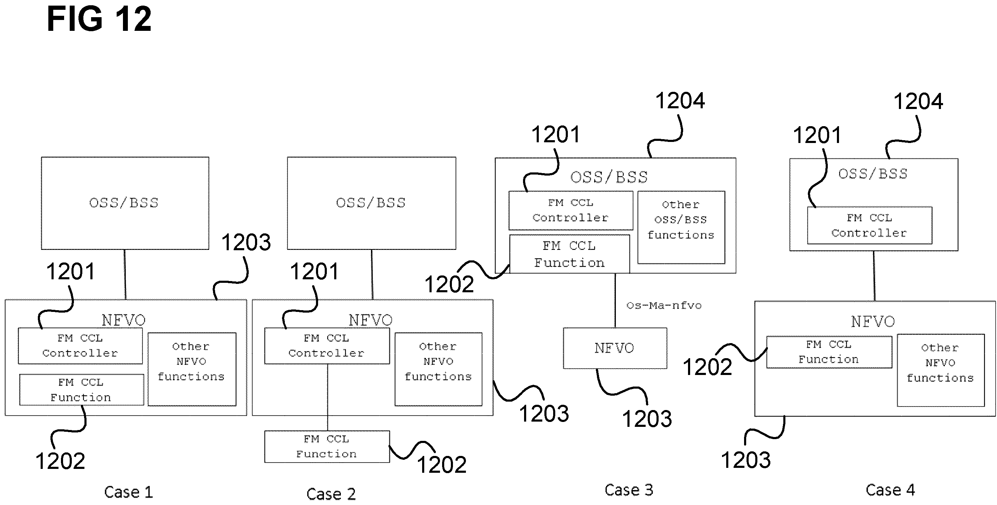

Figure 12 illustrates options for how an FM CCL controller 1201 and an FM CCL Function 1202 may be arranged in an ETSI (European Telecommunications Standards Institute) NFV (Network Function Virtualization) architecture.

In a first option (case 1), the FM CCL controller 1201 and the FM CCL Function 1202 are both part of an NFV Orchestrator (NFVO) 1203.

In a second option (case 2), the FM CCL controller 1201 is part of the NFVO 1203 and the FM CCL Function 1202 is (external and) coupled to the NFVO 1203.

In a third option (case 3), the FM CCL controller 1201 and the FM CCL Function 1202 are both part of an OSSBSS (Operations Support System and Business Support System) 1204.

In a fourth option (case 4), the FM CCL controller 1201 is part of the OSSBSS 1204 and the FM CCL Function 1202 is part of the NFVO 1203.

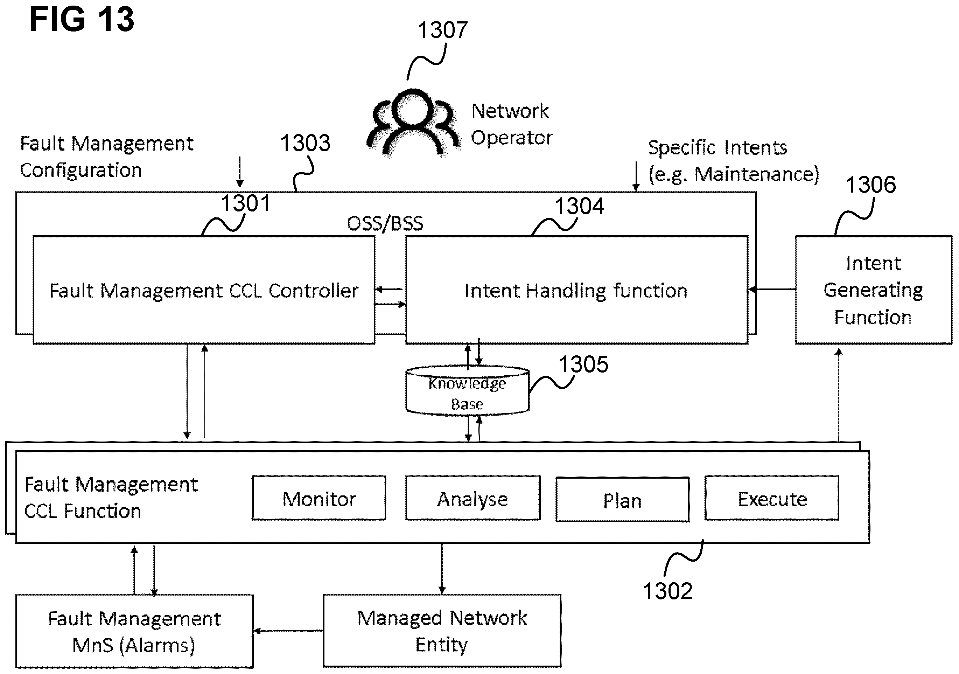

Figure 13 illustrates an embodiment where the FM CCL controller 1301 is part of an OSSBSS 1303 and the FM CCL Function 1302 is external to the OSSBSS 1303.

The OSSBSS 1303 has an intent handling function (of an intent handler) 1304 which shares a knowledge base 1305 with the FM CCL Function 1302.

As described with reference to figure 5, the FM CCL Function 1302 may cause an intent generating function 1306 to generate an intent which is then supplied to the intent handling function 1304.

The OSSBSS may receive, e.g. from a network operator 1307, a fault management configuration and/or specific intents (e.g. maintenance intents).

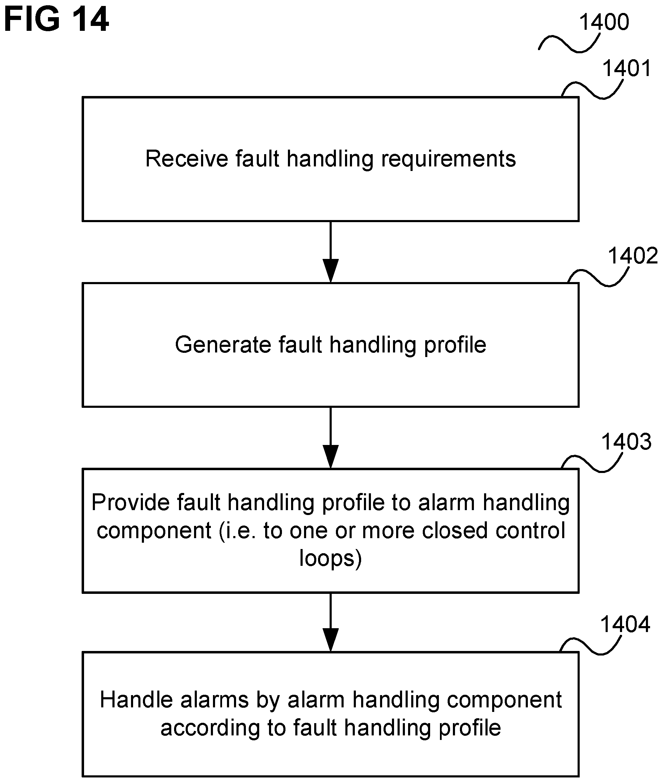

In summary, according to various embodiments, a method is provided as illustrated in figure 14.

Figure 14 shows a flow diagram 1400 illustrating a method for handling faults (i.e. errors) in a mobile communication system (equivalently, this may be seen as a method for handling alarms caused by faults, since handling an alarm includes handling the underlying fault, i.e. the fault having caused the alarm).

In 1401, requirements of a fault handling (e.g. specifying which faults or alarms should be handled and specifying how this should be done (e.g. what conditions and constraints should be taken into account)) are received (e.g. from an operator).

In 1402, a fault handling profile (also referred to as fault management profile herein) is generated (e.g. by a Fault Management CCL Controller as described in the above examples) based on the received requirements, wherein the fault handling profile specifies which alarms indicating faults should be handled by one or more closed control loops and a policy on how to handle the alarms by the one or more closed control loops.

In 1403, the fault management profile is provided to an alarm handling component (which can also be seen as a fault handling component) implementing the one or more closed control loops (e.g. along with a request for fault management i.e. alarm handling).

In 1404, the alarm handling component (Fault Management CCL Function in the examples described above) for alarms for which the fault management profile specifies that they should be handled (e.g. in reaction to the request)
- monitors the mobile communication system for detecting the alarms
- analyses, for each of at least some of the detected alarms, a correlation between one or more components of the mobile communication system (i.e. network entities) which have triggered the alarm and one or more further components of the mobile communication system and/or between the alarm and one or more other alarms (e.g. between a performance indicator that caused the alarm and one or more other performance indicators which may cause other alarms)
- determines fault management actions (i.e. troubleshooting actions like isolating a network entity (e.g. a network function), rebooting a network entity, replacing a network entity etc.) according to the policy specified by the fault handling profile taking into account the determined correlations (e.g. selecting the actions such that (negative) impact on the one or more further components is avoided or such that it is avoided that other alarms are raised or performance indicators based on which other alarms are raised are (negatively) influenced)

- triggers execution of the determined fault management actions and
- clears alarms which were caused by faults that were successfully handled by the executed fault management actions.

According to various embodiments, in other words, functionality to automatically handle alarms and underlying errors is provided in a (e.g. mobile) communication system. For this, an interface component is provided between an entity requesting the fault management and specifying requirements (e.g. a network operator or an orchestration system etc.) and an alarm handling component which implements the actual closed control loops. This interface component generates a fault management profile which the alarm handling component respects. The interface component can thus be seen as a (fault management) CCL controller.

Specifically, according to various embodiments, one or more of the following are introduced:
- a Fault Management CCL to clear selected alarms
- a FaultManagementClosedControlLoop IOC to represent the Fault Management CCL
- a FaultManagementProfileIOC to specify request and requirements to clear the alarms
- a FaultManagementReport IOC to report the results of a specific FaultManagementProfileIOC
- a Fault Management CCL Controller to configure and manage LCM of Fault Management CCL
- a FaultManagementCCLReport IOC to report health status and success rate of Fault Management CCL
- Interfaces between Intent Handlers and Fault ManagementCCL Controller to delegate fault management requests to fulfil specific intents
- Interfaces between Fault Management CCL and Intent Generating Function to generate intents (i.e. Maintenance Intent)

The approach of figure 14 enables new operations related to alarm resolving and alarm clearance. It is non-restrictive to one orchestration framework (e.g., 3GPP) and can be applied to other designs like in O-RAN based solutions. It is not tailored to a specific technology or framework and both RAN and core deployment scenarios can be applied for it.

The method is for example performed by a fault handling arrangement (or system) of the communication system.

The components of the component performing the method (e.g. a receiver (or input interface), a profile generator, an interface (to provide the profile) and the alarm handling component may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for handling faults in a mobile communication system, comprising:
receiving requirements of a fault handling;
generating a fault handling profile based on the received requirements, wherein
the fault handling profile specifies which alarms indicating faults should be handled by one or more closed control loops and a policy on how to handle the alarms by the one or more closed control loops;
providing the fault management profile to an alarm handling component implementing the one or more closed control loops, wherein the alarm handling component, for alarms for which the fault management profile specifies that they should be handled,
monitors the mobile communication system for detecting the alarms; analyses, for each of at least some of the detected alarms, a correlation between one or more components of the mobile communication system which have triggered the alarm and one or more further components of the mobile communication system and/or between the alarm and one or more other alarms;
determines fault management actions according to the policy specified by the fault handling profile taking into account the determined correlations; triggers execution of the determined fault management actions; and
clears alarms which were caused by faults that were successfully handled by the executed fault management actions.

2. The method of claim 1, wherein the fault handling profile specifies which alarms should be handled by including a list of identifications of alarms that were triggered.

3. The method of claim 1 or 2, wherein each of at least some of the alarms that should be handled according to the fault management profile corresponds to a violation of a respective threshold by a respective performance indicator.

4. The method of claim 3, wherein monitoring the mobile communication system for detecting alarms comprises for each of the at least some of the alarms, monitoring the performance indicator.

5. The method of any one of claims 1 to 4, wherein the policy on how to handle the alarms includes, for one or more performance indicators, a threshold, wherein passing the threshold allows clearing a respective alarm.

6. The method of any one of claims 1 to 5, wherein the policy on how to handle the alarms includes, for one or more alarms, allowed actions to take for handling the one or more alarms and/or required actions to take for handling the one or more alarms.

7. The method of any one of claims 1 to 6, wherein the policy on how to handle the alarms includes, for each of one or more alarms, a deadline for clearing the alarm.

8. The method of any one of claims 1 to 7, wherein the policy on how to handle the alarms includes, for each of one or more alarms, a specification of at least one closed control loop to be used for handling the alarm.

9. The method of any one of claims 1 to 8, wherein the alarm handling component further generates a report about which alarms have been cleared and sends the report to a generator of the fault handling profile.

10. The method of any one of claims 1 to 9, comprising sending information about which alarms have been cleared to a sender of the requirements.

11. The method of any one of claims 1 to 10, wherein triggering execution of the determined fault management actions comprises triggering that an intent is generated and supplied to an intent handler, wherein the intent specifies that the determined fault management actions should be handled.

12. The method of any one of claims 1 to 11, comprising, for one or more detected alarms which have not been successfully handled by the executed fault management actions, notify one or more other fault handling components to perform further fault management actions.

13. The method of any one of claims 1 to 12, comprising requesting the alarm handling component to implement the one or more closed control loops and/or to stop implementing the one or more control loops after alarms have been handled.

14. The method of any one of claims 1 to 13, further comprising receiving capability information from the alarm handling component about which alarms the alarm handling component can handle, wherein the fault handling profile is generated taking the received capability information into account.

15. A fault handling arrangement of a communication system, configured to perform the method of any one of claims 1 to 14.
